# EUROPEAN PATENT SPECIFICATION

(11) **EP 2 857 261 B1**
(45) Date of publication and mention of the grant of the patent: **14.02.2018**
(21) Application number: 14187740.7
(22) Date of filing: 06.10.2014
(51) Int. Cl.: B60P 1/26

(54) **Truck with tipping body**
LKW mit Kippmulde
Camion avec benne basculante

(30) Priority: 07.10.2013 IT VR20130224
(43) Date of publication of application: 08.04.2015
(73) Proprietor: Scattolini S.p.A., 37067 Valeggio sul Mincio (Verona) (IT)
(72) Inventor: Venturelli, Paolo, 37067 Valeggio sul Mincio (Verona) (IT)
(74) Representative: Ponchiroli, Simone

(56) References cited:
- DE-U1- 20 011 942
- DE-U1- 20 206 823
- GB-A- 688 122
- US-A- 4 691 956
- US-B1- 6 764 130

## Description

This invention relates to a truck with tipping body.

It is applied in trucks in which the body can be tipped (and for this purpose it is rotatably mounted on the frame of the truck) and comprises at least one openable side board with dual opening modes (that is to say, board tipping downwards or oscillating about the upper part).

As is known, the body comprises a load-bearing structure, a loading bed mounted on the load-bearing structure and at least four side boards, at least one of which is openable.

In fact, on a body of that type it is possible to load both tools (for example tools to be used on sites) and materials (for example loose materials such as sand, gravel and other aggregates) of various types.

In particular, to allow unloading of the materials contained in the body, the latter can be tipped and therefore at least one of the side boards must be openable. In most cases the openable side board is the one positioned at the rear of the body (therefore, this invention is mainly for that case), but in some applications it may also be one of the boards positioned at the sides of the body. It should also be noticed that this invention may be applied both on bodies which have only backward tipping, and on bodies with multiple tipping (three-sided).

In particular, the openable side board is positioned at the unloading side of the loading bed to, in use, allow unloading of the material transported.

In the case of bodies with multiple (three-sided) tipping, in which the body may be tipped backwards or sideways, the body comprises multiple unloading sides. In that case this invention may be applied to all of the unloading sides or to only one of them.

The openable side board comprises a base portion, hookable to the load-bearing structure close to the loading bed, and a top portion, hookable to the load-bearing structure and distanced from the base portion. The body also comprises constraining means for rotatably and independently constraining the base portion and the top portion to the load-bearing structure. The openable side board can be selectively released from the load-bearing structure either manually at the top portion or automatically at the base portion during tipping of the body. In fact, the body comprises coupling means which allow that automatic releasing. They keep the base portion hooked to the load-bearing structure as long as the body is tipped at an angle which is less than a predetermined angle and they allow the base portion to be released from the load-bearing structure when the body is angled at an angle equal to the predetermined angle. Said coupling means may comprise for example a lever associated with a cam mechanism. In particular, the cam mechanism is sized in such a way that, when the body is angled at the predetermined angle, the lever disengages from the base portion and leaves the base portion free to be released from the load-bearing structure.

As already indicated, the openable side board may alternatively be releasable from the load-bearing structure at the top portion, for example to facilitate an operator climbing onto the body and the pickup of objects positioned on the loading bed.

However, this prior art technology has several disadvantages.

In particular, with the prior art bodies, the openable side board detaches from the body when it is released at the top portion and the body is tipped and angled at an angle at least equal to the predetermined angle.

In fact, when the body is angled at said predetermined angle, the lever disengages from the base portion, leaving it free to be released from the load-bearing portion, irrespective of whether or not the top portion is hooked to the load-bearing structure (and if the top portion is released from the load-bearing structure, the openable side board detaches from the body).

That accidental detachment during unloading operations may involve, first, several risks for the safety of operators who may be located close to said side board, since they may be injured by the board falling.

Moreover, the detachment of the side board may cause damage to the board due to its impact on the ground.

Furthermore, in some embodiments, once the body has exceeded the predetermined tipping angle, if the board has not detached from the rest of the body, it may be the lever itself which damages it due to the position of the various parts relative to one another.

Consequently, in use it is not possible to tip the body with the openable side board open downwards.

DE 200 11 942 U1 and DE 202 06 823 U1 reflate to locking devices for a back board of a tipping body including the features of the preamble of claim 1.

In this context the technical purpose which forms the basis of this invention is to provide a truck with tipping body which overcomes the above-mentioned disadvantages.

In particular, the technical purpose of this invention it to provide a truck with tipping body for which there is no risk of accidental detachment of the openable side board during unloading operations.

It is also the technical purpose of this invention to provide a truck with tipping body which guarantees greater safety for operators who work close to said truck. Finally, the technical purpose of this invention is to provide a truck with tipping body in which the openable side board cannot be damaged due to an accidental detachment during unloading operations.

The technical purpose specified and the aims indicated are substantially achieved by a truck with tipping body as described in the appended claims.

Further features and the advantages of this invention are more apparent in the detailed description of a preferred, non-limiting embodiment of a truck with tipping body illustrated in the accompanying drawings, in which:
- Figure 1 is an axonometric view, partly in cross-section, of a detail of the body at an openable side board positioned in a closed configuration, and of the system for hooking the board to the rest of the body;
- Figure 2 is a side view of the detail of Figure 1;
- Figure 3 is a partial view, not in cross-section, of the detail of Figure 1;
- Figure 4 is a rear face view of the detail of Figure 3;
- Figure 5 shows the detail of Figure 1 in a first angled configuration;
- Figure 6 is a side view of the detail of Figure 5;
- Figure 7 shows the detail of Figure 1 in a first unloading position;
- Figure 8 is a side view of the detail of Figure 7;
- Figure 9 is a partial view, not in cross-section, of the detail of Figure 7;
- Figure 10 shows the detail of Figure 1 in which the openable side board is in an open configuration;
- Figure 11 is a side view of the detail of Figure 10;
- Figure 12 shows the detail of Figure 10 in a second unloading position;
- Figure 13 is a side view of the detail of Figure 12;
- Figure 14 shows the detail of Figure 12 in a further unloading
position;
- Figure 15 is a side view of the detail of Figure 14;
- Figure 16 is a partial view, not in cross-section, of the detail of Figure 14;
- Figure 17 shows only a part of the detail of Figure 3;
- Figure 18 partly shows the detail of Figure 3 but in which the openable side board is in the open configuration;
- Figure 19 is a rear face view of the detail of Figure 18;
- Figure 20 is a cross-section of the detail of Figure 19 according to the line XX - XX;
- Figure 21 is an axonometric whole view of another part of the body of Figure 1; and
- Figure 22 is an axonometric view of a further detail of the body of Figure 1.

With reference to the accompanying drawings the numeral 1 denotes in its entirety a truck with tipping body according to this invention.

It should be noticed that the accompanying drawings show only those parts of the truck 1 which are significant relative to this invention.

It should also be noticed that this invention may be applied both to trucks 1 having bodies 3 which can be tipped backwards and to trucks 1 having bodies 3 which can also be tipped sideways (three-sided tipping bodies 3).

The truck 1 according to this invention comprises first a frame 2 (partly visible in the accompanying drawings), a cab (not visible in the accompanying drawings) mounted on the frame 2 and a tipping body 3 mounted on the frame 2. It should be noticed that, in use, the body 3 is mounted on the frame 2 to the rear of the cab according to a direction of movement of the truck 1 on the road.

The body 3 may be tipped by thrust means (not visible in the accompanying drawings, but of the known type), for example an oil hydraulic cylinder, to allow, in use, unloading of the materials contained in the body 3.

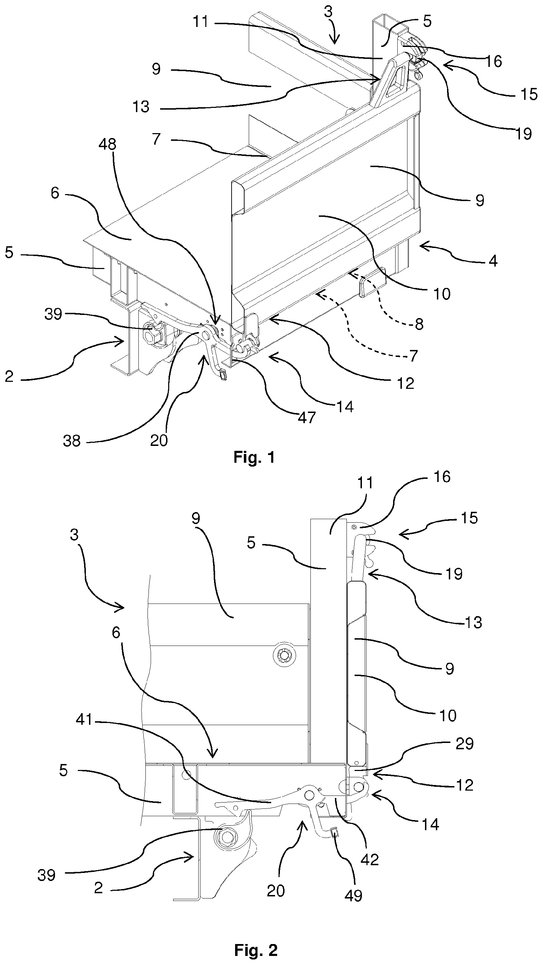

The body 3 comprises a front part (not visible in the accompanying drawings), substantially close to the cab of the truck 1, and a rear part 4 (partly visible in Figure 1), substantially distanced from the cab.

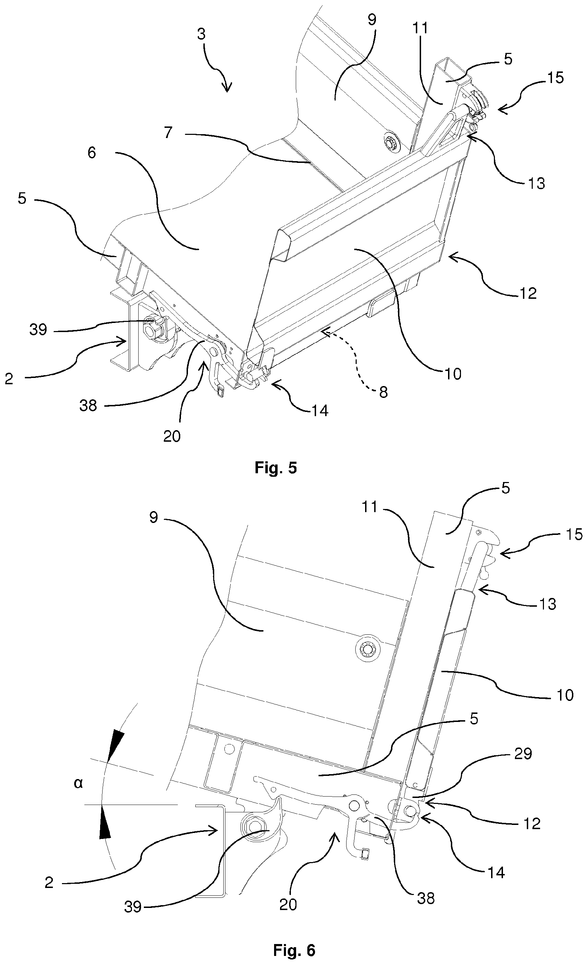

Said body 3 comprises a load-bearing structure 5, which is rotatably mounted on the frame 2 of the truck 1 according to a main axis of rotation. The load-bearing structure 5 is rotatable relative to the frame 2 about said main axis of rotation between a transport position and a plurality of tipping positions. It should be noticed that in the transport position (see Figures 1 and 2) the load-bearing structure 5 is substantially close to the frame 2. In contrast, in the tipping positions (see Figures 6, 8 and 13) the load-bearing structure 5 is partly distanced from the frame 2 and is at an angle relative to when it is in the transport position.

It should be noticed that, in use, the main axis of rotation is substantially perpendicular to the direction of movement of the truck 1 in the case of bodies 3 which tip backwards. The load-bearing structure 5 may also be rotatable about two or more main axes of rotation, in use substantially parallel with the direction of movement of the truck 1, for trucks 3 which also have lateral tipping (three-sided tipping trucks).

The body 3 also comprises a loading bed 6 (partly visible in Figure 1) mounted on the load-bearing structure 5. In use, the materials and/or tools which are loaded on the body 3 rest on said loading bed 6.

The loading bed 6 has four sides 7. At least one of the four sides 7 is an unloading side 8 (see Figure 1). The latter is positioned substantially close to the main axis of rotation and is parallel with said main axis of rotation.

It should also be noticed that, when the load-bearing structure 5 is in the transport position, the loading bed 6 is substantially in a lowered configuration (see Figures 1 and 2) to allow, in use, the transportation of materials and tools contained in the body 3 (more precisely, positioned on the loading bed 6). In the lowered configuration, the loading bed 6 is advantageously parallel with a surface on which the truck 1 is, in use, positioned. In particular, in the embodiment illustrated, in use, the loading bed 6 is substantially horizontal when the load-bearing structure is in the transport position (and therefore the loading bed 6 is in the lowered configuration) and the truck 1 rests on flat ground.

In contrast, when the load-bearing structure 5 is in the tipping positions, the loading bed 6 is in a configuration set at an angle relative to when it is in the lowered configuration. It should be noticed that, thanks to a tipping of the body 3, it is preferably possible, in use, to unload from the body 3 loose materials such as sand, gravel and other aggregates.

The body 3 further comprises at least four side boards 9, one of which is a front side board 9, close to the cab of the truck 1, one is a rear side board 9, opposite to the front side board 9 and distanced from the cab, and two are lateral side boards 9 opposite one another and positioned between the front side board 9 and the rear side board 9.

Each side board 9 is associated with one of the sides 7 of the loading bed 6.

In the embodiment illustrated, between the side boards 9 (at least between the rear side board 9 and the two opposite side boards 9 positioned between the front side board 9 and the rear side board 9) there are one or more uprights 11 of the load-bearing structure 5 and the side boards 9 are associated with said uprights 11 (see Figures 1 and 2). However, in other embodiments, it is also possible that the uprights 11 are not present and that the side boards 9 may be associated directly with one another.

At least the side board 9 positioned at the unloading side 8 is an openable side board 10.

In the embodiment illustrated, the openable side board 10 advantageously coincides with the rear side board 9 (therefore, the unloading side 8 is positioned in the rear part 4 of the body 3) and the body 3 may be tipped backwards towards the rear part 4 of the body 3 (the front part of the body 3 is therefore distanced from the frame 2). However, in other embodiments, the openable side board 10 may coincide with one of the opposite side boards 9 positioned between the front side board 9 and the rear side board 9 and the body 3 may be tipped sideways towards one side of the truck 1.

However, it should be noticed that when the body 3 may also be tipped sideways towards at least one of the opposite side boards 9 positioned between the front side board 9 and the rear side board 9, the loading bed 6 comprises two or more unloading sides 8 and the body 3 must comprise more than one openable side board 10, each associated with one of the loading sides 8.

The openable side board 10 comprises a base portion 12 and a top portion 13 (see Figures 1 and 2). Both the base portion 12 and the top portion 13 are independently rotatably couplable to the load-bearing structure 5.

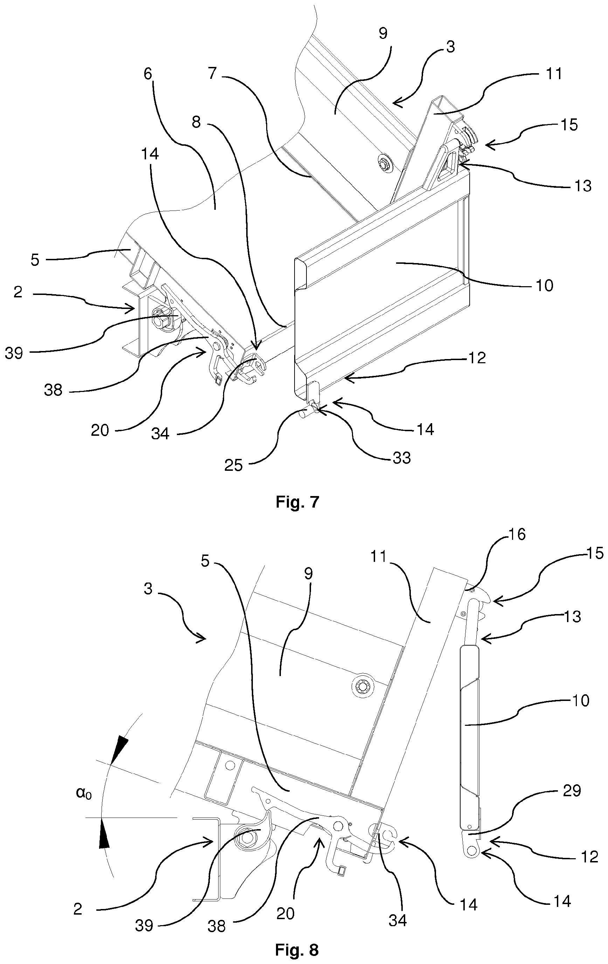

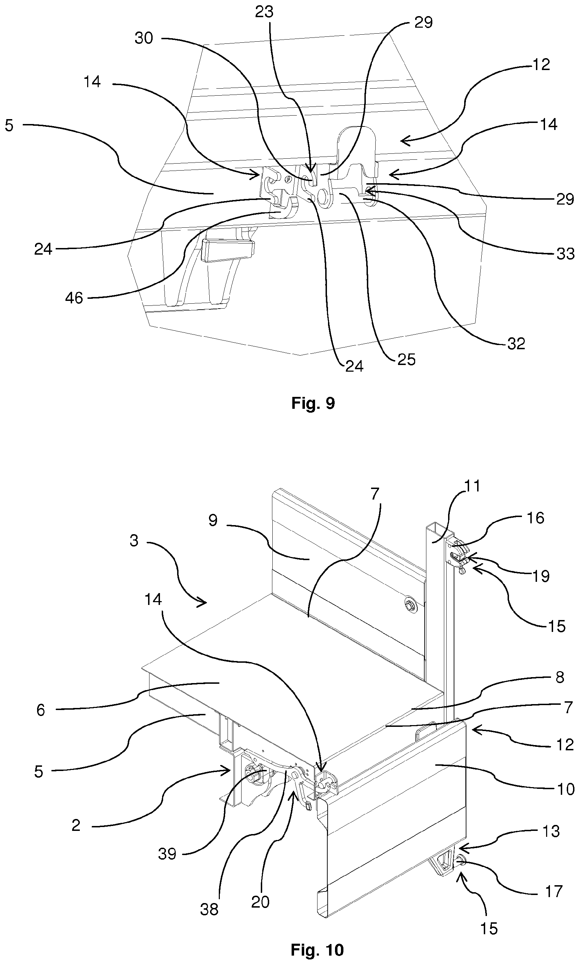

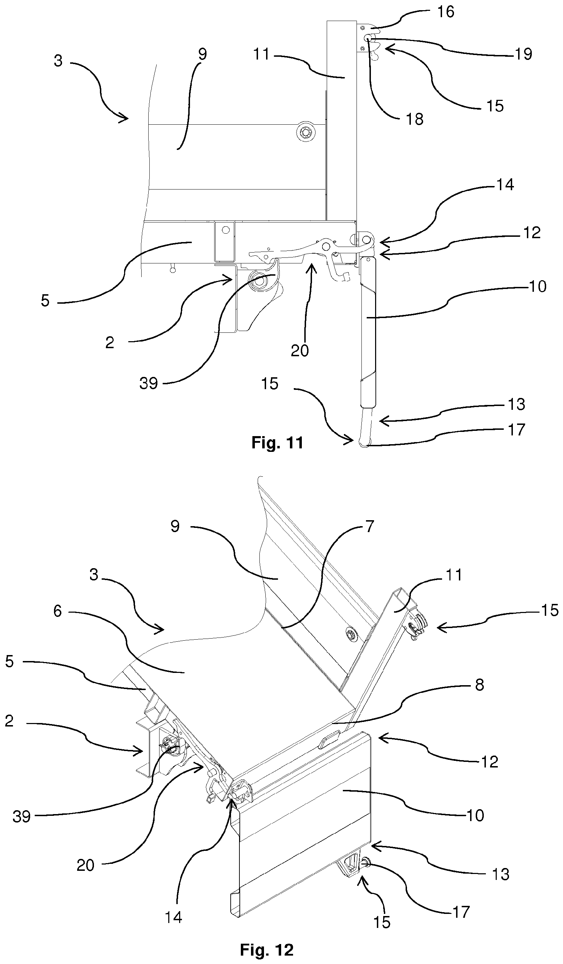

In fact, the openable side board 10 has dual opening modes. The first opening mode (see Figures 10 and 11) comprises uncoupling of the top portion 13 of the load-bearing structure 5 and tipping of the openable side board 10 downwards (the top portion 13 is positioned below the base portion 12). In contrast, the second opening mode comprises uncoupling of the base portion 12 from the load-bearing structure 5 and an oscillation of the openable side board 10 relative to the load-bearing structure 5 (see Figures 7 and 8).

In accordance with the first opening mode, the openable side board 10 is movable between a closed position (see Figures 1 and 2) and a plurality of first open positions (see Figures 10, 11, 12 and 13); whilst in accordance with the second opening mode, the openable side board 10 is movable between said closed position and a plurality of second open positions (see Figures 7 and 8) which are different from the first open positions.

In particular, in the closed position (see Figures 1 and 2), the openable side board 10 closes the body 3 and is positioned substantially perpendicularly to the loading bed 6 with the base portion 12 adjacent to the loading bed 6. Therefore, advantageously, the top portion 13 is positioned substantially above the base portion 12 when the openable side board 10 is in the closed position and the truck 1 is, in use, positioned on a substantially horizontal surface.

The openable side board 10 can move from said closed position (see Figures 1 and 2) to the first open positions (see Figures 10, 11, 12 and 13) by means of a rotation about a first axis of rotation. Said first axis of rotation is substantially parallel with the unloading side 8 and substantially adjacent to the base portion 12.

It should be highlighted that the top portion 13 is positioned substantially on opposite sides relative to a plane defined by the loading bed 6, when the openable side board 10 is in the closed position and in the first open positions. In particular, in the first open positions when the truck 1 is, in use, positioned on a substantially horizontal surface, the top portion 13 and the base portion 12 are substantially vertically aligned and the top portion 13 is positioned substantially below the base portion 12.

It should be noticed that, in the preferred embodiment illustrated, the top portion 13 may be manually dissociated from the load-bearing structure 5 (as explained in more detail below) to advantageously allow, in use, the operators to easily climb onto the loading bed 6 and to manually unload the various types of objects contained in the body 3.

The openable side board 10 may also move from the closed position (see Figures 1 and 2) to the second open positons (see Figures 7 and 8) by a rotation about a second axis of rotation substantially parallel with the unloading side 8 and substantially adjacent to the top portion 13.

It should be highlighted that the base portion 12 is further from the loading bed 6 when the openable side board 10 is in the second open positions than when the openable side board 10 is in the closed position. Moreover, even in the second open positions, the base portion 12 and the top portion 13 are substantially vertically aligned when, in use, the truck 1 is positioned on a substantially horizontal surface (but, unlike the first open positions, there is no inversion of the position of the top portion 13 and the base portion 12 relative to one another compared with their positions relative to one another when the openable side board 10 is in the closed position).

It should be noticed that, in the preferred embodiment illustrated, the base portion 12 can be automatically uncoupled from the load-bearing structure 5 (as explained in more detail below) following tipping of the body 3.

The body 3 also comprises first constraining means 14, for constraining the base portion 12 to the load-bearing structure 5 rotatably about the first axis of rotation.

In particular, said first constraining means 14 substantially hold the base portion 12 coupled to the load-bearing structure 5 when the openable side board 10 is in the first open positions, and substantially leave the base portion 12 free to uncouple from the load-bearing structure 5 when the openable side board 10 is in the closed position. In the embodiment illustrated, the first constraining means 14 identify the first axis of rotation. The first constraining means 14 are described in more detail below.

The body 3 also comprises second constraining means 15 for selectively constraining the top portion 13 to the load-bearing structure 5 rotatably about the second axis of rotation. In the embodiment illustrated, the second constraining means 15 identify the second axis of rotation.

The second constraining means 15 advantageously comprise at least two fixing bodies 16 and at least two elongate elements 17, one set of said parts being fixed to the load-bearing structure 5 of the body 3 and the other fixed to the openable side board 10 (see Figures 10 and 11).

In the embodiment illustrated, each fixing body 16 is advantageously fixed to one of the uprights 11 of the load-bearing structure 5, but in other embodiments it is also possible that the fixing bodies 16 are fixed to the side boards 9 adjacent to the openable side board 10 (in particular in the case in which the body 3 comprises a single openable side board 10 and the uprights 11 are not present).

In the known way, each fixing body 16, in the embodiment illustrated, comprises a first seat 18, in which the elongate element 17 is insertable, and comprises a movable part 19, movable between a locking position and an unlocking position. In particular, when the elongate element 17 is inserted in the first seat 18 and the movable part 19 is in the locking position, the elongate element 17 is substantially locked in said first seat 18 (the top portion 13 is coupled to the load-bearing structure 5). In contrast, when the elongate element 17 is inserted in the first seat 18 and the movable part 19 is in the unlocking positon, the elongate element 17 is substantially free to come out of the first seat 18 (the top portion 13 is substantially free to uncouple from the load-bearing structure 5). It should be noticed that, in the preferred embodiment illustrated, the movable part 19 advantageously moves between the locking position and the unlocking position, in use, by means of a manual operation by an operator. The second constraining means 15 are in any case of the known type and therefore are not described in further detail herein.

In other embodiments, it is also possible that the second constraining means 15 are in however of a different type, provided that they are suitable for the purpose.

The body 3 further comprises coupling means 20, mounted on the load-bearing structure 5 and associated with the base portion 12. Said coupling means 20 hold the base portion 12 coupled to the load-bearing structure 5 at least when the openable side board 10 is in the closed position and the load-bearing structure 5 is in one of the tipping positions but is set at an angle which is less than a predetermined reference angle α₀ relative to when it is in the transport position (see Figures 5 and 6). Moreover, the coupling means 20 allow uncoupling of the base portion 12 from the load-bearing structure 5 at least when the load-bearing structure 5 is angled at said predetermined reference angle α₀ relative to when it is in the transport position (see Figures 7 and 8). Moreover, in the preferred embodiment, the coupling means 20 are designed to hold the base portion 12 coupled to the load-bearing structure 5 even when the load-bearing structure 5 is in one of the tipping positions and is set at an angle relative to when it is in the transport position which is greater than the predetermined reference angle α₀ by at least a predetermined value. In other words, in this embodiment the coupling means 20 allow uncoupling of the base portion 12 from the load-bearing structure 5 when the load-bearing structure 5 is angled, relative to when it is in the transport position, at an angle between the predetermined reference angle α₀ and the predetermined reference angle α₀ plus the predetermined value.

Returning to the first constraining means 14, these advantageously comprise supporting means 21, sustaining means 22 and associating means 23.

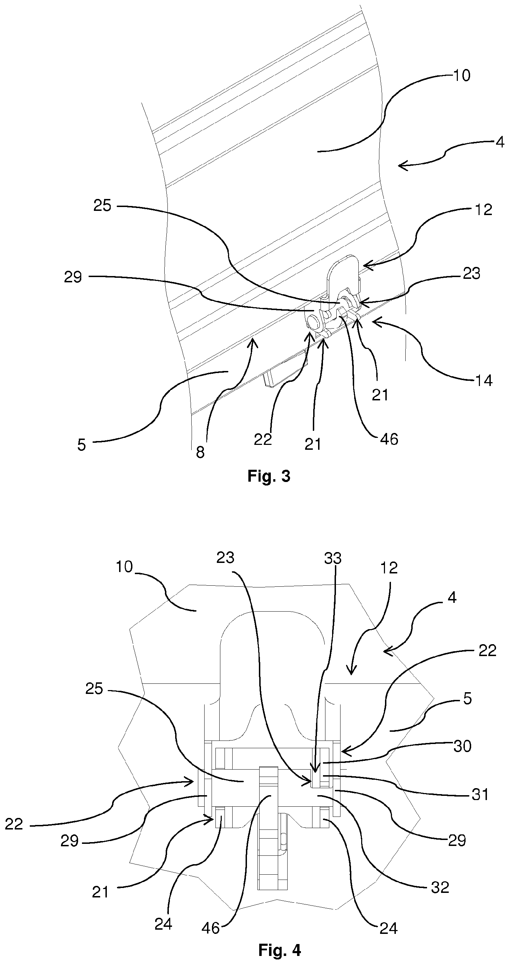

The supporting means 21 are mounted on the load-bearing structure 5 and fixed to the load-bearing structure 5 (see Figures 3, 17 and 18) for supporting the openable side board 10.

In contrast, the sustaining means 22 are mounted on the base portion 12, fixed to the base portion 12 and couplable to the supporting means 21.

Preferably, the supporting means 21 and the sustaining means 22 comprise, one set at least one supporting element 24, and the other at least one pin 25. In general, advantageously, the supporting means 21 comprise at least one supporting element 24 and the sustaining means 22 comprise at least one pin 25 (see Figures 3, 4, 18 and 19). However, in other embodiments it is also possible that the supporting means 21 comprise at least one pin 25 and that the sustaining means 22 comprise at least one supporting element 24 (solution not illustrated).

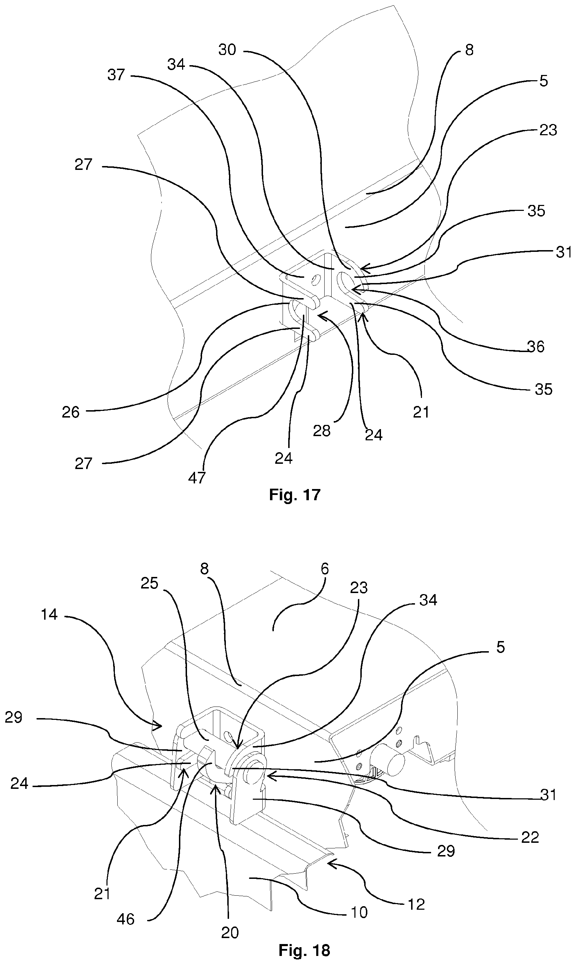

Preferably, the supporting means 21 comprise a plurality of supporting elements 24 for each pin 25. Each supporting element 24 projects relative to the load-bearing structure 5 and is substantially constituted of a first fork 26 having a "C" shape, comprising two prongs 27 spaced and parallel with one another and having a second seat 28 in which the pin 25 is insertable (see Figures 17 and 18). However, in other embodiments, the supporting means 21 may be of a different type and the supporting element 24 may have different shapes provided that they are suitable for the purpose. In the embodiment illustrated, the pin 25 extends substantially according to a longitudinal axis of extension and is couplable to the supporting element 24 rotatably about the first axis of rotation. The pin 25 is also substantially free to uncouple from the supporting element 24 according to a releasing direction when the openable side board 10 is in the closed position. It should be noticed that, in the embodiment illustrated, said releasing direction is substantially orthogonal to the longitudinal axis of extension of the pin 25 (more precisely it extends along an arc of a circle centred on the second axis of rotation).

It should also be noticed that, in the embodiment illustrated, the pin 25 has a circular cross-section perpendicularly to the longitudinal axis of extension (see Figures 3 and 7).

Moreover, in the embodiment illustrated, the base portion 12 of the openable side board 10 comprises, at the pin 25, one or more brackets 29 (two in the accompanying drawings) fixed to the base portion 12, projecting relative to the base portion 12 and elongate along a direction of extension substantially perpendicular to the first axis of rotation when the load-bearing structure 5 is in the closing position (see Figures 3 and 4). The pin 25 is advantageously fixed to the bracket or brackets 29.

However, in other embodiments, the base portion 12 may comprise at least a third seat in which the pin 25 fixed to the base portion 12 is inserted (solution not illustrated). It should be noticed that, in the latter case, the supporting element 24 must be of a different type to that of the embodiment illustrated (for example the supporting element 24 must be more elongate to guarantee sufficient free space for the openable side board 10 to be able to rotate about the first axis of rotation). According to the innovative aspect of this invention, the associating means 23 are operatively associable with the sustaining means 22 for holding the sustaining means 22 coupled to the supporting means 21 when the openable side board 10 is in the first open positions, and for substantially leaving the sustaining means 22 free to uncouple from the supporting means 21 when the openable side board 10 is in the closed position.

In the embodiment illustrated, the associating means 23 comprise at least a locking element 30, comprising an end part 31, and at least a shaped body 32 (see Figures 3, 18 and 19).

In particular, the locking element 30 and the shaped body 32 are associated one with the load-bearing structure 5 and the other with the base portion 12. Advantageously, in the embodiment illustrated, the locking element 30 is associated with the load-bearing structure 5, whilst the shaped body 32 is associated with the base portion 12 of the openable side board 10. However, in other embodiments, the locking element 30 may be associated with the base portion 12 and the shaped body 32 may be associated with the load-bearing structure 5 (solution not illustrated).

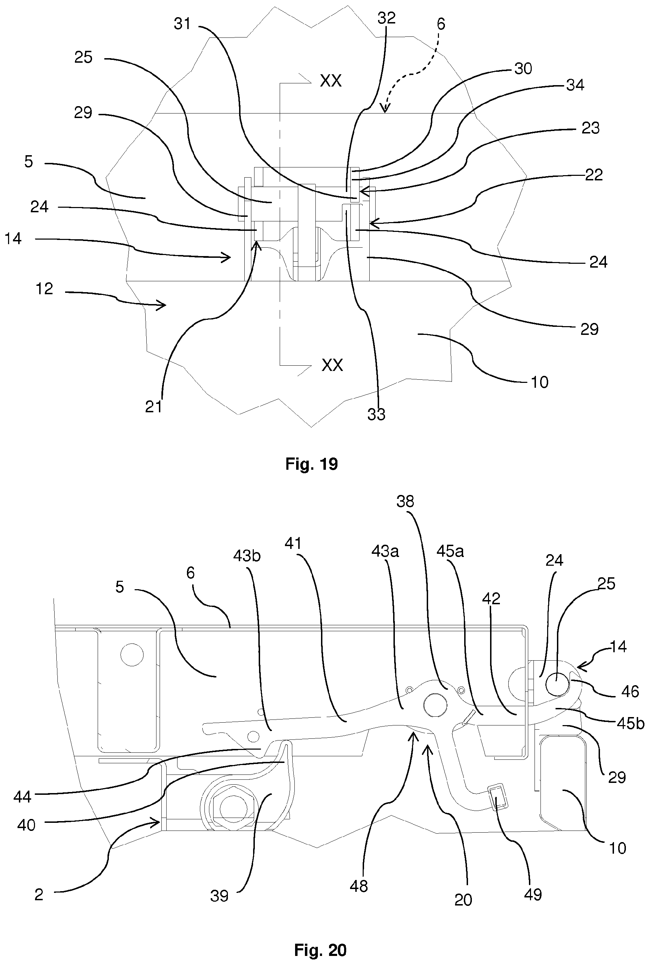

The shaped body 32 and the end part 31 are substantially aligned with one another in a plane perpendicular to the first axis of rotation according to the releasing direction at least when the openable side board 10 is in the first open positions, substantially to prevent reciprocal movement of the end part 31 and of the shaped body 32 along the releasing direction and to hold the base portion 12 coupled to the load-bearing structure 5 (see Figure 19).

In contrast, the shaped body 32 and the end part 31 are substantially out of alignment with one another relative to the releasing direction when the openable side board 10 is in the closed position, substantially to allow reciprocal movement of the end part 31 relative to the shaped body 32 along the releasing direction and to substantially leave the base portion 12 free to uncouple from the load-bearing structure 5 (see Figure 4).

In the embodiment illustrated, the pin 25 comprises the shaped body 32 and a recess 33 made at the shaped body 32 (see Figures 3, 4, 18 and 19). In particular, the shaped body 32 is obtained by creating the recess 33 in the lateral surface of the pin 25, which comprises, in a plane perpendicular to the longitudinal axis of extension and passing through the shaped body 32 and through the recess 33, a cross-section constituted of a circular segment with a base identifying the shaped body 32. The shaped body 32 advantageously extends eccentrically relative to the longitudinal axis of extension of the pin 25.

The end part 31 and the recess 33 are substantially aligned with one another in the plane perpendicular to the first axis of rotation according to the releasing direction (and the shaped body 32 and the end part 31 are in contrast substantially out of alignment with one another relative to the releasing direction) when the openable side board 10 is in the closed position (see Figures 3 and 4). The end part 31 may therefore pass through the recess 33 when the openable side board 10 moves from the closed position towards the second open positions, in such a way as to allow substantially the reciprocal movement of the end part 31 relative to the shaped body 32 along the releasing direction and to leave the base portion 12 substantially free to uncouple from the load-bearing structure 5.

In contrast, the end part 31 and the recess 33 are substantially out of alignment with one another relative to the releasing direction (and the shaped body 32 and the end part 31 are substantially aligned with one another in a plane perpendicular to the first axis of rotation according to the releasing direction) at least when the openable side board 10 is in the first open positions, substantially to prevent the reciprocal movement of the end part 31 relative to the shaped body 32 along the releasing direction and to hold the base portion 12 coupled to the load-bearing structure 5 (see Figure 19).

It should be noticed that, in other embodiments, it is also possible that at least one shaped body 32 is in contrast associated with the pin 25 using other methods, provided that they are suitable for the purpose. For example the shaped body 32 may be fixed to the bracket or brackets 29 of the pin 25 (solution not illustrated).

In the preferred embodiment illustrated, the locking element 30 forms a single body 34 with the supporting element 24 (see Figure 17).

In particular, the single body 34 has, perpendicularly to the first axis of rotation, a "C" shaped with two ends 35. One of said ends 35 projects towards the other and constitutes the end part 31 of the locking element 30 (see Figure 17).

Advantageously, the single body 34 forms, inside the "C" shape, a housing 36 in which the pin 25 is rotatably and slidably insertable, and extractable according to the releasing direction when the openable side board 10 is in the closed position (see Figure 17).

However, in other embodiments, the locking element 30 and the supporting element 24 may be constituted of two separate bodies. For example the locking element 30 may have the "C" shape described above and may be positioned adjacent to the supporting element 24, or it may be constituted of an elongate element projecting relative to the load-bearing structure 5 and with the end part 31 substantially close to the supporting element 24 and alignable and misalignable relative to the shaped body 32 (solutions not illustrated).

It should also be noticed that, in the preferred embodiment, the supporting means 21 and the sustaining means 22 comprise, one set at least two supporting elements 24, and the other at least two pin 25. In particular, advantageously, the supporting means 21 comprise at least two supporting elements 24, spaced from one another, and the sustaining means 22 comprise at least two pins 25, spaced from one another and each couplable to one of the two supporting elements 24. Moreover, in the preferred embodiment illustrated, the associating means 23 comprise at least two locking elements 30 and at least two shaped bodies 32, one for each pin 25.

In the embodiment illustrated, the supporting means 21 comprise a first supporting element 24, a second supporting element 24, which forms a first single body 34 with one of the two locking elements 30 (see Figure 17), a third supporting element 24 (similar to the first supporting element 24) and a fourth supporting element 24 (similar to the second supporting element 24), which forms a second single body 34 with the other of the two locking elements 30. The first supporting element 24 and the first single body 34 are advantageously substantially adjacent to one another. In contrast, the third supporting element 24 and the second single body 34 are substantially adjacent to one another and spaced from the first supporting element 24 and from the first single body 34. Advantageously, in the preferred embodiment illustrated, the first supporting element 24 and the first single body 34 form a first single part 37 (see Figure 17) and, similarly, the second supporting element 24 and the second single body 34 for a second single part 37. Advantageously, each single part 37 seen from above has a "C" shape (see Figure 17).

It should be noticed that one of the two pins 25 is couplable to the first single part 37 and the other of the two pins 25 is couplable to the second single part 37.

Returning to the coupling means 20, in the embodiment illustrated, these comprise a lever 38, operatively associated with the frame 2 and with the first constraining means 14. Said lever 38 is mounted on the load-bearing structure 5 rotatably about a secondary axis of rotation substantially parallel with the first axis of rotation.

In the embodiment illustrated, the coupling means 20 also comprise a contact element 39, fixed to the frame 2 (see Figures 1, 2, 20 and 22). In particular, the contact element 39 comprises a first protuberance 40 facing towards the loading bed 6 (upwards when in use the truck 1 lies in a substantially horizontal plane).

The lever 38 comprises a first arm 41 and a second arm 42 (see Figure 20). The first arm 41 is operatively associated with the contact element 39 (in particular at the top of the contact element 39 when in use the truck 1 lies in a substantially horizontal plane) and the second arm 42 is in contrast operatively associated with the pin 25 (advantageously not at the shaped body 32 and the recess 33).

The first arm 41 interacts with the contact element 39, depending on the position of the load-bearing structure 5, for determining a rotation of the lever 38 about the secondary axis of rotation. In fact, the lever 38 can rotate, about said secondary axis of rotation, between a plurality of initial positions and at least a final position.

In the initial positions the second arm 42 holds the base portion 12 coupled to the load-bearing structure 5 when the openable side board 10 is in the closed position and the load-bearing structure 5 is in one of the tipping positions and is set at an angle which is less than a predetermined reference angle α₀ relative to when it is in the transport position (see Figures 5 and 6). In contrast, in the final position, the second arm 42 allows uncoupling of the base portion 12 from the load-bearing structure 5 at least when the load-bearing structure 5 is angled at the predetermined reference angle α₀ relative to when it is in the transport position (see Figures 7 and 8).

In the embodiment illustrated, the first arm 41 is substantially elongate and extends between a first connecting portion 43a, which is connected to the second arm 42 and is fixed to it, and a first cantilever portion 43b, close to which a second protuberance 44 is made which interacts with the first protuberance 40 of the contact element 39.

Moreover, in the embodiment illustrated, the second arm 42 is substantially elongate (although not as long as the first arm 41) and extends between a second connecting portion 45a, which is connected to the first arm 41 and is fixed to it, and a second cantilever portion 45b, where a tooth 46 is made which is associated with the pin 25. Advantageously, the coupling means 20 comprise a cam mechanism constituted of the first protuberance 40 and the second protuberance 44. The first protuberance 40 and the second protuberance 44 each have a respective shape designed to cause a rotation of the lever 38 about the secondary axis of rotation depending on the position of the load-bearing structure 5. In particular, the first protuberance 40 and the second protuberance 44 interact, causing a rotation of the lever 38 from one of the initial positions towards the final position, when the load-bearing structure 5 moves from the transport position to one of the tipping positions and is set at an angle which is less than the predetermined reference angle α₀ relative to when it is in the transport position. During that rotation of the lever 38, the second arm 42 (in particular the tooth 46) holds at least partly closed the housing 36 in which the pin 25 is inserted (see Figure 6), therefore the latter cannot uncouple from the supporting element 24 (or from the supporting elements 24 if present).

Moreover, the first protuberance 40 and the second protuberance 44 interact, causing a rotation of the lever 38 from one of the initial positions towards the final position, when the load-bearing structure 5 moves from the transport position to the tipping position in which it is set at the predetermined reference angle α₀ relative to when it is in the transport position. Following that rotation of the lever 38, the second arm 42 (in particular the tooth 46) opens the housing 36 in which the pin 25 is inserted (see Figure 8), therefore the latter is substantially free to uncouple from the supporting element 24 (or from the supporting elements 24 if present).

Moreover, in the preferred embodiment illustrated, the cam mechanism is made in such a way that, when the load-bearing structure 5 is in one of the tipping positions and is set at an angle relative to when it is in the transport position which is greater than the predetermined reference angle α₀ by at least the predetermined value, the second arm 42 is in one of its own initial positions.

However, it should be noticed that in other embodiments the lever 38 and the contact element 39 may have different forms provided that they are suitable for the purpose.

The load-bearing structure 5 comprises, close to the unloading side 8 and the lever 38, at least one opening 47 in which the second arm 42 is slidably inserted (see Figures 1 and 17).

In the embodiment illustrated, the coupling means 20 also comprise elastic means 48, associated with the lever 38 and with the load-bearing structure 5, for pushing the second arm 42 towards the contact element 39. The thrust applied by the elastic means 48 on the lever 38 guarantees that the first arm 41 remains substantially operatively associated with the contact element 39.

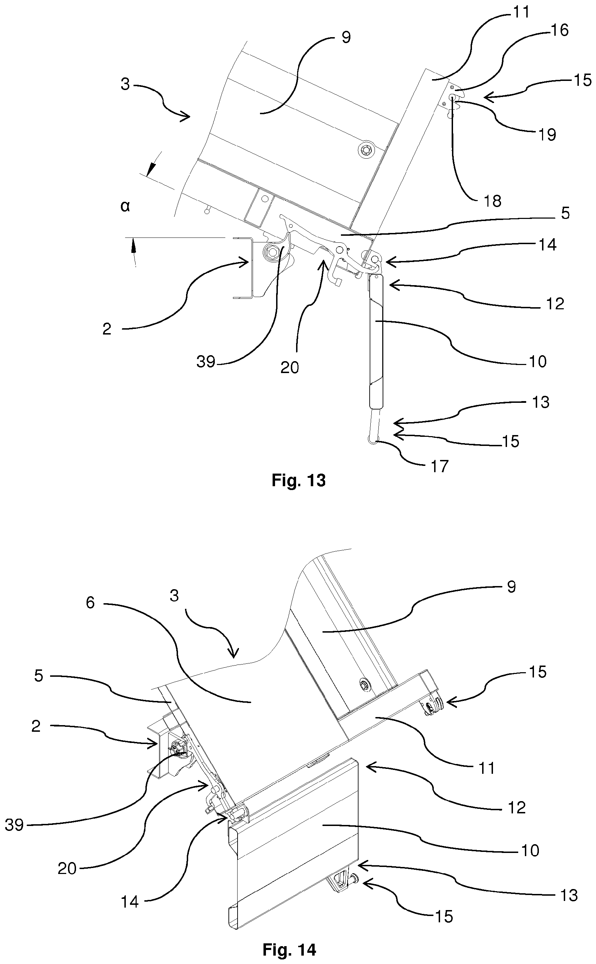

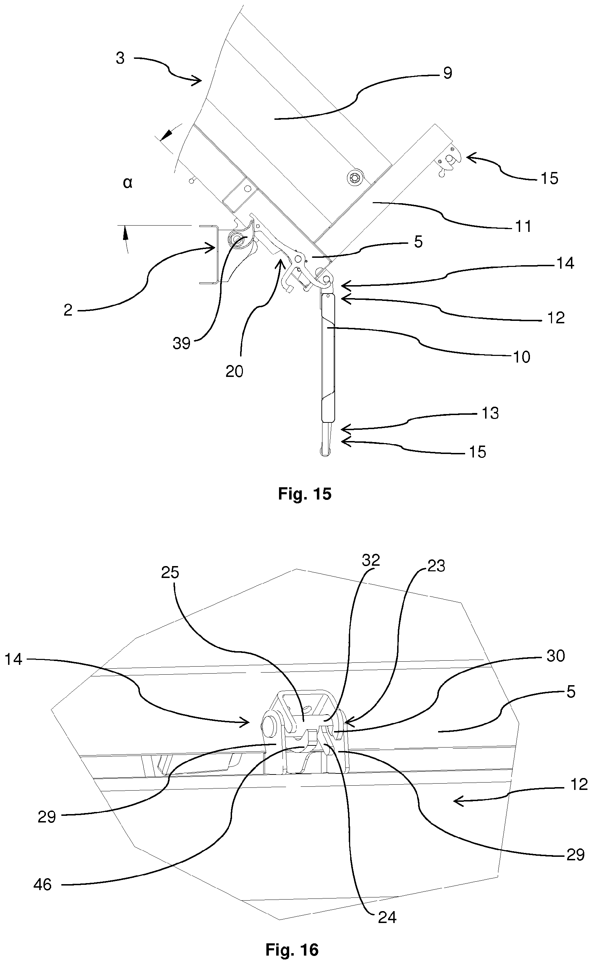

It should be noticed that, in the embodiment illustrated, when the lever 38 has reached the final position it can still rotate about the secondary axis of rotation (since the first arm 41 continues to interact with the contact element 39). In this case, if the load-bearing structure 5 is in a tipping position and is set at an angle relative to when it is in the transport position which is greater than the predetermined reference angle α₀, the lever 38 may be located at least in a further position (see Figures 14, 15 and 16) in which the second arm 42 (in particular the tooth 46) can in any case close the housing 36 (even if the pin 25 is no longer inserted in the housing 36 at that point).

It should be noticed that, in the embodiment illustrated, when the load-bearing structure 5 moves from the tipping position, in which the load-bearing structure 5 is angled at the predetermined reference angle α₀, towards the transport position, the lever 38 moves towards one of the initial positions, but the pin 25 cannot be automatically associated with the supporting element 24 since the second arm 42 of the lever 38 closes the housing 36 before the pin 25 can be inserted in it. Therefore, in this case, the pin 25 is associated with the supporting element 24 after manual operation of the lever 38 to open the entrance to the housing 36. For that purpose, the lever 38 is in fact equipped with a handle 49 (see Figure 20), fixed to the lever 38, which can be used to manually operate the lever 38 making it rotate from one of the initial positions to the final position (irrespective of the position of the load-bearing structure 5) in such a way that the second arm 42 (in particular the tooth 46) opens the housing 36.

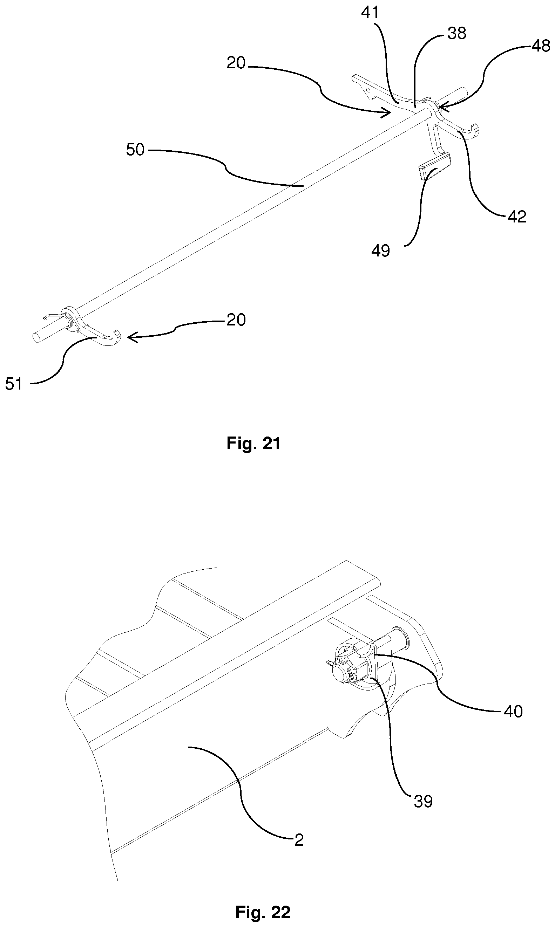

In the preferred embodiment illustrated, as previously indicated, the supporting means 21 and the sustaining means 22 comprise, one set at least two supporting elements 24, and the other at least two pins 25 and the associating means 23 comprise at least two locking elements 30 and at least two shaped bodies 32. Moreover in the preferred embodiment illustrated, the coupling means 20 advantageously comprise a rod 50, fixed to said lever 38, and a third arm 51, fixed to said rod 50 and distanced from the lever 38 (see Figure 21).

In particular, the third arm 51 is advantageously aligned with the second arm 42 along the secondary axis of rotation and rotates about the secondary axis of rotation in such a way that it is synchronised with the second arm 42. The second arm 42 and the third arm 51 are operatively associated, one with a first of the pins 25 and the other with a second of the pins 25, on one hand for holding the base portion 12 coupled to the load-bearing structure 5 when the openable side board 10 is in the closed position and the load-bearing structure 5 is in one of the tipping positions and is set at an angle which is less than the predetermined reference angle α₀ relative to when it is in the transport position, and on the other hand for allowing uncoupling of the base portion 12 from the load-bearing structure 5 at least when the load-bearing structure 5 is set at said predetermined reference angle α₀ relative to when it is in the transport position.

In the preferred embodiment illustrated, the reference angle α₀ is substantially between 15° and 20°. However, in other embodiments, it is also possible that it has a different value or that it is substantially within a different range.

It should be noticed that, in other embodiments, the coupling means 20 may be of a different type provided that they are suitable for the purpose (for example, they may comprise a cam mechanism). Therefore, in conclusion, in the preferred embodiment illustrated the top portion 13 can be manually associated with and dissociated from the load-bearing structure 5 (manual release and manual hooking of the top portion 13), whilst the base portion 12 is automatically dissociated from the base portion 12 (following tipping of the body 3) only when the top portion 13 is constrained to the load-bearing structure 5.

This invention brings important advantages.

In fact, the truck with tipping body according to this invention is not subject to any risk of accidental detachment of the openable side board during unloading operations.

The solution provided guarantees greater safety for operators working close to the truck, since they cannot be accidentally injured due to detachment of the openable side board.

Moreover, with the solution provided, the openable side board cannot be damaged due to an accidental detachment during unloading operations. In fact, the base portion of the openable side board is automatically released from the load-bearing structure, after tipping of the body, only when the top portion is hooked to the load-bearing structure.

Therefore, thanks to this invention it is possible to use tipping of the body without worrying even with a side board which is openable downwards. Finally, it should be noticed that this invention is relatively easy to produce and that even the cost linked to implementing the invention is not very high.

The invention described above may be modified and adapted in several ways without thereby departing from the scope of the inventive concept. Moreover, all details of the invention may be substituted with other technically equivalent elements and the materials used, as well as the shapes and dimensions of the various components, may vary according to requirements.

## Claims

1. A truck with tipping body comprising:
- a frame (2); and
- a tipping body (3) mounted on the frame (2);
said tipping body (3) comprising:
- a load-bearing structure (5), rotatably mounted on the frame (2) according to a main axis of rotation, the load-bearing structure (5) being rotatable relative to the frame (2) about said main axis of rotation between a transport position, in which the load-bearing structure (5) is substantially close to the frame (2), and a plurality of tipping positions, in which the load-bearing structure (5) is partly distanced from the frame (2) and is set at an angle relative to when it is in the transport position;
- a loading bed (6), mounted on said load-bearing structure (5) and comprising an unloading side (8) substantially parallel with and close to said main axis of rotation;
- at least one openable side board (10), positioned at the unloading side (8) and comprising a base portion (12), rotatably couplable to the load-bearing structure (5), and a top portion (13), rotatably couplable to the load-bearing structure (5),
the openable side board (10) being mobile between a closed position, in which the openable side board (10) closes the tipping body (3) and is positioned substantially perpendicularly to the loading bed (6) with the base portion (12) adjacent to the loading bed (6), and a plurality of first open positions and between said closed position and a plurality of second open positions which are different from the first open positions;
the openable side board (10) being able to move from the closed position to the first open positions by a rotation about a first axis of rotation substantially parallel with said unloading side (8) and substantially adjacent to said base portion (12), the top portion (13) being positioned substantially on opposite sides relative to a plane defined by the loading bed (6) when the openable side board (10) is in the closed position and in the first open positions; the openable side board (10) being able to move from the closed position to the second open positions by a rotation about a second axis of rotation substantially parallel with said unloading side (8) and substantially adjacent to the top portion (13), the base portion (12) being further from the loading bed (6) when the openable side board (10) is in the second open positions than when the openable side board (10) is in the closed position;
- first constraining means (14), for constraining the base portion (12) to the load-bearing structure (5) rotatably about said first axis of rotation; said first constraining means (14) substantially holding the base portion (12) coupled to the load-bearing structure (5) when the openable side board (10) is in the first open positions, and substantially leaving the base portion (12) free to uncouple from the load-bearing structure (5) when the openable side board (10) is in the closed position;
- second constraining means (15), for selectively constraining the top portion (13) to the load-bearing structure (5) rotatably about the second axis of rotation; and
- coupling means (20), mounted on the load-bearing structure (5) and associated with the base portion (12), for holding the base portion (12) coupled to the load-bearing structure (5) when the openable side board (10) is in the closed position and the load-bearing structure (5) is in one of the tipping positions and is set at an angle which is less than a predetermined reference angle a₀ relative to when it is in the transport position, and for allowing uncoupling of the base portion (12) from the load-bearing structure (5) at least when the load-bearing structure (5) is set at said predetermined reference angle a0 relative to when it is in the transport position;
wherein said first constraining means (14) comprise:
- supporting means (21), mounted on the load-bearing structure (5) and fixed to the load-bearing structure (5), for supporting the openable side board (10);
- sustaining means (22), mounted on the base portion (12), fixed to the base portion (12) and couplable to said supporting means (21); and
- associating means (23), operatively associable with said sustaining means (22), for holding the sustaining means (22) coupled to the supporting means (21) when the openable side board (10) is in the first open positions, and for substantially leaving the sustaining means (22) free to uncouple from the supporting means (21) when the openable side board (10) is in the closed position;
**characterised in that** said associating means (23) comprise at least a locking element (30), comprising an end part (31), and at least a shaped body (32), the locking element (30) and the shaped body (32) being associated one with the load-bearing structure (5) and the other with the base portion (12);
said shaped body (32) and said end part (31) being substantially aligned with one another in a plane perpendicular to the first axis of rotation according to a releasing direction at least when the openable side board (10) is in the first open positions, substantially to prevent reciprocal movement of the end part (31) and of the shaped body (32) along the releasing direction and to hold the base portion (12) coupled to the load-bearing structure (5);
said shaped body (32) and said end part (31) being substantially out of alignment with one another relative to the releasing direction when the openable side board (10) is in the closed position, substantially to allow reciprocal movement of the end part (31) relative to the shaped body (32) along the releasing direction and to substantially leave the base portion (12) free to uncouple from the load-bearing structure (5).

2. The truck according to claim 1, wherein said supporting means (21) and said sustaining means (22) comprise, one set at least one supporting element (24), and the other at least one pin (25), said pin (25) extending substantially according to a longitudinal axis of extension and being couplable to the supporting element (24) rotatably about said first axis of rotation,
the pin (25) being substantially free to uncouple from the supporting element (24) according to the releasing direction when the openable side board (10) is in the closed position; said releasing direction being substantially orthogonal to the longitudinal axis of extension.

3. The truck according to claim 2, wherein said pin (25) comprises said shaped body (32) and a recess (33) made at the shaped body (32), the end part (31) and the recess (33) being substantially aligned with one another in the plane perpendicular to the first axis of rotation according to the releasing direction when the openable side board (10) is in the closed position and the end part (31) being insertable in the recess (33) when the openable side board (10) moves from the closed position towards the second open positions.

4. The truck according to claim 2 or 3, wherein the supporting element (24) and the locking element (30) form a single body (34).

5. The truck according to claim 4, wherein said single body (34) has, perpendicularly to the first axis of rotation, a "C" shape with two ends (35), one of said ends (35) projecting towards the other and being constituted of said end part (31), the single body (34) forming inside the "C" shape a housing (36) in which said pin (25) is rotatably and slidably insertable and extractable according to said releasing direction when said shaped body (32) and said end part (31) are substantially not aligned with one another relative to said releasing direction.

6. The truck according to any one of claims 2 to 5, wherein said supporting means (21) and said sustaining means (22) comprise, one set at least two supporting elements (24), and the other at least two pins (25) and the associating means (23) comprise at least two locking elements (30) and at least two shaped bodies (32).

7. The truck according to any one of claims 2 to 6, wherein the coupling means (20) comprise a contact element (39), fixed to the frame (2), and a lever (38), operatively associated with the frame (2) and with the first constraining means (14), said lever (38) being mounted on the load-bearing structure (5) rotatably about a secondary axis of rotation substantially parallel with the first axis of rotation, said lever (38) comprising a first arm (41), operatively associated with said contact element (39), and a second arm (42), operatively associated with said pin (25),
the first arm (41) interacting with the contact element (39) depending on the position of the load-bearing structure (5) for determining a rotation of the lever (38) about said secondary axis of rotation between a plurality of initial positions, in which the second arm (42) holds the base portion (12) coupled to the load-bearing structure (5) when the openable side board (10) is in the closed position and the load-bearing structure (5) is in one of the tipping positions and is set at an angle which is less than the predetermined reference angle a₀ relative to when it is in the transport position, and at least a final position, in which the second arm (42) allows uncoupling of the base portion (12) from the load-bearing structure (5) at least when the load-bearing structure (5) is set at said predetermined reference angle a₀ relative to when it is in the transport position.

8. The truck according to claims 6 and 7, wherein the coupling means (20) comprise a rod (50), fixed to said lever (38), and a third arm (51), fixed to said rod (50) and distanced from the lever (38), the third arm (51) being aligned with the second arm (42) along the secondary axis of rotation and rotating about the secondary axis of rotation in a synchronised fashion with the second arm (42), the second arm (42) and the third arm (51) being operatively associated one with a first of said pins (25) and the other with a second of said pins (25) for holding the base portion (12) coupled to the load-bearing structure (5) when the openable side board (10) is in the closed position and the load-bearing structure (5) is in one of the tipping positions and is set at an angle which is less than the predetermined reference angle a₀ relative to when it is in the transport position, and for allowing uncoupling of the base portion (12) from the load-bearing structure (5) at least when the load-bearing structure (5) is set at said predetermined reference angle a₀ relative to when it is in the transport position.

9. The truck according to claim 7 or 8, wherein said coupling means (20) also comprise elastic means (48), associated with the lever (38) and with the load-bearing structure (5), for pushing said first arm (41) towards the contact element (39).

10. The truck according to any one of the preceding claims, **characterised in that** the coupling means (20) are designed to hold the base portion (12) coupled to the load-bearing structure (5) even when the load-bearing structure (5) is in one of the tipping positions and is set at an angle relative to when it is in the transport position which is greater than the predetermined reference angle a₀ by at least a predetermined value.

11. The truck according to claim 10 and any one of claims 7 to 9, wherein, when the load-bearing structure (5) is in one of the tipping positions and is set at an angle relative to when it is in the transport position which is greater than the predetermined reference angle a₀ by at least a predetermined value, the second arm (42) is in one of its own initial positions.

## Patentansprüche

1. Ein LKW mit Kippmulde, Folgendes umfassend:
- einen Rahmen (2); und
- eine Kippmulde (3), am Rahmen (2) montiert;
besagte Kippmulde (3) umfasst dabei:
- eine Lastentragstruktur (5), welche drehbar am Rahmen (2) montiert ist, entsprechend einer Hauptrotationsache, die Lastentragstruktur (5) ist dabei um besagte Hauptrotationsachse in Bezug auf den Rahmen (2) drehbar zwischen einer Transportposition, in der die Lastentragstruktur (5) im Wesentlichen nahe am Rahmen (2) ist, und einer Mehrzahl von Kipppositionen, in denen die Lastentragstruktur (5) teilweise in einem gewissen Abstand vom Rahmen (2) ist und in einem Winkel dazu steht, wenn sie in der Transportposition ist;
- eine Ladepritsche (6), die an besagter Lastentragstruktur (5) montiert ist und eine Entladeseite (8) umfasst, welche im Wesentlichen parallel zu und nahe an besagter Hauptrotationsachse ist;
- mindestens eine Seitenwand (10), die geöffnet werden kann, auf der Entladeseite (8) positioniert ist und einen Bodenteil (12) umfasst, welcher drehbar an die Lastentragstruktur (5) gekuppelt werden kann, und einen oberen Teil (13), welcher drehbar an die Lastentragstruktur (5) gekuppelt werden kann, die zu öffnende Seitenwand (10) ist dabei beweglich zwischen einer geschlossenen Position, in der die zu öffnende Seitenwand (10) die Kippmulde (3) schließt und im Wesentlichen lotrecht zur Ladepritsche (6) steht, wobei sich der Bodenteil (12) direkt an der Ladepritsche (6) befindet, und einer Mehrzahl von ersten offenen Positionen und zwischen besagter geschlossener Position und einer Mehrzahl von zweiten offenen Positionen, die sich von den ersten offenen Positionen unterscheiden;
die zu öffnende Seitenwand (10) kann dabei von der geschlossenen Position in die ersten offenen Positionen bewegt werden, durch eine Drehung um eine erste Rotationsachse, welche im Wesentlichen parallel zu besagter Entladeseite (8) ist und im Wesentlichen direkt an besagtem Bodenteil (12) liegt, der obere Teil (13) ist dabei im Wesentlichen an gegenüberliegenden Seiten in Bezug auf eine Ebene positioniert, die durch die Ladepritsche (6) definiert ist, wenn die zu öffnende Seitenwand (10) in der geschlossenen Position und in den ersten offenen Positionen ist; die zu öffnende Seitenwand (10) kann dabei durch eine Drehung um eine zweite Rotationsachse, die im Wesentlichen parallel zu besagter Entladeseite (8) und im Wesentlichen direkt am oberen Teil (13) ist, von der geschlossenen Position in die zweiten offenen Positionen bewegt werden, der Bodenteil (12) befindet sich dabei weiter von der Ladepritsche (6) entfernt, wenn die zu öffnende Seitenwand (10) in den zweiten offenen Positionen ist, als wenn die zu öffnende Seitenwand (10) in der geschlossenen Position ist;
- erste Begrenzungsmittel (14) zur Einschränkung des Bodenteils (12) an der Lastentragstruktur (5) drehbar um besagte erste Rotationsachse; besagte erste Begrenzungsmittel (14) halten dabei den Bodenteil (12) im Wesentlichen an der Lastentragstruktur (5) angekuppelt, wenn die zu öffnende Seitenwand (10) in den ersten offenen Positionen ist, und lässt den Bodenteil (12) im Wesentlichen frei, so dass er sich von der Lastentragstruktur (5) abkuppeln kann, wenn die zu öffnende Seitenwand (10) in der geschlossenen Position ist;
- zweite Begrenzungsmittel (15) zur selektiven Einschränkung des oberen Teils (13) an der Lastentragstruktur (5) drehbar um die zweite Rotationsachse; und
- Kupplungsmittel (20), welche an der Lastentragstruktur (5) montiert und mit dem Bodenteil (12) verbunden sind, um den Bodenteil (12) an die Lastentragestruktur (5) gekuppelt zu halten, wenn die zu öffnende Seitenwand (10) in der geschlossenen Position ist und die Lastentragstruktur (5) in einer der Kipppositionen ist und sich in einem Winkel befindet, der kleiner als ein vorher festgelegter Referenzwinkel a₀ im Vergleich dazu ist, wenn sie in der Transportposition ist, und um das Abkuppeln des Bodenteils (12) von der Lastentragstruktur (5) zu erlauben, zumindest dann, wenn die Lastentragstruktur (5) in besagtem vorher festgelegten Referenzwinkel a₀ im Vergleich dazu, wenn sie sich in der Transportposition befindet, steht;
wobei besagte erste Begrenzungsmittel (14) Folgendes umfassen:
- Trägermittel (21), die an der Lastentragstruktur (5) montiert und an der Lastentragstruktur (5) befestigt sind, um die zu öffnende Seitenwand (10) zu stützen;
- Haltemittel (22), welche am Bodenteil (12) montiert und am Bodenteil (12) befestigt sind und an besagte Trägermittel (21) gekuppelt werden können; und
- Verbindungsmittel (23), welche operativ mit besagten Haltemitteln (22) verbunden werden können, um die Haltemittel (22) zu halten, welche an die Trägermittel (21) gekuppelt sind, wenn die zu öffnende Seitenwand (10) in den ersten offenen Positionen ist, und um die Haltemittel (22) im Wesentlichen freizugeben, um sich von den Trägermitteln (21) abzukuppeln, wenn die zu öffnende Seitenwand (10) in der geschlossenen Position ist;
**gekennzeichnet dadurch, dass** besagte Verbindungsmittel (23) mindestens ein Sperrelement (30) umfassen, welches ein Endteil (31) und zumindest einen Formkörper (32) umfasst, das Sperrelement (30) und der Formkörper (32) sind dabei eines mit der Lastentragstruktur (5) und der andere mit dem Bodenteil (12) verbunden; besagter Formkörper (32) und besagtes Endteil (31) sind dabei im Wesentlichen miteinander gefluchtet, auf einer Ebene, welche lotrecht zur ersten Rotationsachse in Bezug auf eine Freigaberichtung ist, zumindest wenn die zu öffnende Seitenwand (10) in den ersten offenen Positionen ist, im Wesentlichen, um die gegenseitige Bewegung des Endteils (31) und des Formkörpers (32) in der Freigaberichtung zu verhindern und um den Bodenteil (12) an die Lastentragstruktur (5) gekuppelt zu halten;
besagter Formkörper (32) und besagtes Endteil (31) sind dabei im Wesentlichen nicht miteinander gefluchtet in Bezug auf die Freigaberichtung, wenn die zu öffnende Seitenwand (10) in der geschlossenen Position ist, im Wesentlichen, um die gegenseitige Bewegung des Endteils (31) in Bezug auf den Formkörper (32) in der Freigaberichtung zu ermöglichen und um den Bodenteil (12) im Wesentlichen freizugeben, damit er sich von der Lastentragstruktur (5) abkuppeln kann.

2. Der LKW nach dem Patentanspruch 1, wobei besagte Trägermittel (21) und besagte Haltemittel (22) jeweils die einen zumindest ein Trägerelement (24) und die anderen zumindest einen Stift (25) umfassen, wobei sich besagter Stift (25) im Wesentlichen auf einer Ausdehnungsachse in Längsrichtung ausdehnt und drehbar um besagte erste Rotationsachse an das Trägerelement (24) gekuppelt werden kann,
der Stift (25) ist dabei im Wesentlichen frei, um sich vom Trägerelement (24) in Freigaberichtung zu lösen, wenn die zu öffnende Seitenwand (10) in der geschlossenen Position ist; besagte Freigaberichtung ist dabei im Wesentlichen rechtwinklig zur längs gerichteten Ausdehnungsachse.

3. Der LKW nach dem Patentanspruch 2, wobei besagter Stift (25) besagten Formkörper (32) und eine Aussparung (33), die im Formkörper (32) vorhanden ist, umfasst, das Endteil (31) und die Aussparung (33) sind dabei im Wesentlichen auf der Ebene, die lotrecht zur ersten Rotationsachse in Bezug auf die Freigaberichtung steht, miteinander gefluchtet, wenn die zu öffnende Seitenwand (10) in der geschlossenen Position ist und es ist dabei möglich, das Endteil (31) in die Aussparung (33) einzuführen, wenn sich die zu öffnende Seitenwand (10) von der geschlossenen Position in die zweiten offenen Positionen bewegt.

4. Der LKW nach den Patentansprüchen 2 oder 3, wobei das Trägerelement (24) und das Sperrelement (30) einen einzigen Körper (34) bilden.

5. Der LKW nach dem Patentanspruch 4, wobei besagter einziger Köper (34) lotrecht zur ersten Rotationsachse eine "C"-Form mit zwei Enden (35) hat, wobei sich eines der besagten Enden (35) in Richtung des anderen erstreckt und aus besagtem Endteil (31) besteht, der einzige Körper (34), welcher in der "C"-Form ein Gehäuse (36) bildet, in das besagter Stift (25) drehbar und verschiebbar eingesteckt werden und in besagter Freigaberichtung herausgezogen werden kann, wenn besagter Formkörper (32) und besagtes Endteil (31) im Wesentlichen in Bezug auf besagte Freigaberichtung nicht miteinander gefluchtet sind.

6. Der LKW nach jedem der Patentansprüche 2 bis 5, wobei besagte Trägermittel (21) und besagte Haltemittel (22) Folgendes umfassen: die einen mindestens zwei Trägerelemente (24) und die anderen mindestens zwei Stifte (25), und die Verbindungsmittel (23) umfassen mindestens zwei Sperrelemente (30) und mindestens zwei Formkörper (32).

7. Der LKW nach jedem der vorherigen Patentansprüche 2 bis 6, wobei die Kupplungsmittel (20) ein Kontaktelement (39) umfassen, das am Rahmen (2) befestigt ist, und einen Hebel (38), der operativ mit dem Rahmen (2) und den ersten Begrenzungsmitteln (14) verbunden ist, besagter Hebel (38) ist dabei drehbar um eine zweite Rotationsachse, die im Wesentlichen parallel zur ersten Rotationsachse ist, an der Lastentragstruktur (5) montiert, besagter Hebel (38) umfasst dabei einen ersten Arm (41), der operativ mit besagtem Kontaktelement (39) verbunden ist, und einen zweiten Arm (42), der operativ mit besagtem Stift (25) verbunden ist,
der erste Arm (41) interagiert dabei mit dem Kontaktelement (39) abhängig von der Position der Lastentragstruktur (5), um eine Drehung des Hebels (38) um besagte zweite Rotationsachse zwischen einer Mehrzahl von Ausgangspositionen hervorzurufen, in denen der zweite Arm (42) den Bodenteil (12), gekuppelt an die Lastentragstruktur (5) hält, wenn die zu öffnende Seitenwand (10) in der geschlossenen Position ist und die Lastentragstruktur (5) in einer der Kipppositionen ist und auf einen Winkel gestellt ist, der kleiner als der vorher festgelegte Referenzwinkel a₀ im Verhältnis dazu ist, wenn sie sich in der Transportposition befindet, und schließlich eine Endposition, in der der zweite Arm (42) das Lösen des Bodenteils (12) von der Lastentragstruktur (5) erlaubt, zumindest dann, wenn die Lastentragstruktur (5) in besagtem vorher festgelegtem Referenzwinkel a₀ steht, im Verhältnis dazu, wenn sie sich in der Transportposition befindet.

8. Der LKW nach den Patentansprüchen 6 und 7, wobei die Kupplungsmittel (20) eine Stange (50) umfassen, welche an besagtem Hebel (38) befestigt ist, und einen dritten Arm (51), der an besagter Stange (50) befestigt ist und vom Hebel (38) entfernt ist, der dritte Arm (51) ist dabei auf der zweiten Rotationsachse mit dem zweiten Arm (42) gefluchtet und dreht sich synchron zum zweiten Arm (42) um die zweite Rotationsachse, der zweite Arm (42) und der dritte Arm (51) sind dabei einer operativ mit einem ersten der besagten Stifte (25) und der andere mit einem zweiten der besagten Stifte (25) zum Festhalten des Bodenteils (12) verbunden, das an die Lastentragstruktur (5) gekuppelt ist, wenn die zu öffnende Seitenwand (10) in der geschlossenen Position ist und die Lastentragstruktur (5) in einer der Kipppositionen ist und in einem Winkel steht, der kleiner als der vorher festgelegte Referenzwinkel a₀ in Bezug darauf, wenn sie sich in der Transportposition befindet, ist, und um das Lösen des Bodenteils (12) von der Lastentragstruktur (5) zu erlauben, zumindest dann, wenn die Lastentragstruktur (5) in jenen besagten Referenzwinkel a₀ in Bezug darauf, wenn sie sich in der Transportposition befindet, gestellt ist.

9. Der LKW nach den Patentansprüchen 7 oder 8, wobei besagte Kupplungsmittel (20) auch elastische Mittel (48) umfassen, die mit dem Hebel (38) und mit der Lastentragstruktur (5) verbunden sind, um besagten ersten Arm (41) zum Kontaktelement (39) zu drücken.

10. Der LKW nach jedem der vorherigen Patentansprüche, **gekennzeichnet dadurch, dass** die Kupplungsmittel (20) dazu vorgesehen sind, um den Bodenteil (12) an die Lastentragstruktur (5) gekuppelt zu halten, auch dann, wenn sich die Lastentragstruktur (5) in einer der Kipppositionen befindet und in Bezug dazu, wenn sie sich in der Transportposition befindet, in einem Winkel steht, der mindestens um einen vorher festgelegten Wert größer als der vorher festgelegte Referenzwinkel a₀ ist.

11. Der LWK nach dem Patentanspruch 10 und nach jedem der vorherigen Patentansprüche 7 bis 9, wobei, wenn die Lastentragstruktur (5) in einer der Kipppositionen ist und in Bezug darauf, wenn sie sich in der Transportposition befindet, in einem Winkel steht, der mindestens um einen vorher festgelegten Wert größer als der vorher festgelegte Referenzwinkel a₀ ist, sich der zweite Arm (42) in einer seiner eigenen Ausgangspositionen befindet.

## Revendications

1. Un camion avec benne basculante comprenant :
- un châssis (2) ; et
- une benne basculante (3) montée sur le châssis (2) ;
ladite benne basculante (3) comprenant :
- une structure portante (5), montée de façon pivotante sur le châssis (2) selon un axe de rotation principal, la structure portante (5) pouvant pivoter par rapport au châssis (2) autour dudit axe de rotation principal entre une position de transport, dans laquelle la structure portante (5) est essentiellement proche du châssis (2), et une pluralité de positions de basculement, dans lesquelles la structure portante (5) est partiellement distancée du châssis (2) et est inclinée par rapport à quand elle est dans la position de transport ;
- une plateforme de chargement (6), montée sur ladite structure portante (5) et comprenant un côté de déchargement (8) essentiellement parallèle à et proche dudit axe de rotation principal ;
- au moins une ridelle latérale ouvrable (10), positionnée au niveau du côté de déchargement (8) et comprenant une portion de base (12), pouvant être accouplée de façon pivotante à la structure portante (5), et une portion de dessus (13), pouvant être accouplée de façon pivotante à la structure portante (5), la ridelle latérale ouvrable (10) étant mobile entre une position de fermeture, dans laquelle la ridelle latérale ouvrable (10) ferme la benne basculante (3) et est positionnée essentiellement perpendiculairement à la plateforme de chargement (6) avec la portion de base (12) adjacente à la plateforme de chargement (6), et une pluralité de premières positions d'ouverture et entre ladite position de fermeture et une pluralité de deuxièmes positions d'ouverture qui sont différentes des premières positions d'ouverture ;
la ridelle latérale ouvrable (10) pouvant se déplacer de la position de fermeture aux premières positions d'ouverture par le biais d'une rotation autour d'un premier axe de rotation essentiellement parallèle audit côté de déchargement (8) et essentiellement adjacent à ladite portion de base (12), la portion de dessus (13) étant positionnée essentiellement sur des côtés opposés par rapport à un plan défini par la plateforme de chargement (6) quand la ridelle latérale ouvrable (10) est dans la position de fermeture et dans les premières positions d'ouverture ; la ridelle latérale ouvrable (10) pouvant se déplacer de la position de fermeture aux deuxièmes positions d'ouverture par le biais d'une rotation autour d'un deuxième axe de rotation essentiellement parallèle audit côté de déchargement (8) et essentiellement adjacent à la portion de dessus (13), la portion de base (12) étant plus éloignée de la plateforme de chargement (6) quand la ridelle latérale ouvrable (10) est dans les deuxièmes positions d'ouverture que lorsque la ridelle latérale ouvrable (10) est dans la position de fermeture ;
- des premiers moyens d'assujettissement (14), pour assujettir la portion de base (12) à la structure portante (5) de façon pivotante autour dudit premier axe de rotation ; lesdits premiers moyens d'assujettissement (14) maintenant essentiellement la portion de base (12) accouplée à la structure portante (5) quand la ridelle latérale ouvrable (10) est dans les premières positions d'ouverture, et laissant essentiellement la portion de base (12) libre de se désaccoupler de la structure portante (5) quand la ridelle latérale ouvrable (10) est dans la position de fermeture ;
- des deuxièmes moyens d'assujettissement (15), pour assujettir sélectivement la portion de dessus (13) à la structure portante (5) de façon pivotante autour du deuxième axe de rotation ; et
- des moyens d'accouplement (20), montés sur la structure portante (5) et associés à la portion de base (12), pour maintenir la portion de base (12) accouplée à la structure portante (5) quand la ridelle latérale ouvrable (10) est dans la position de fermeture et la structure portante (5) est dans une des positions de basculement et est inclinée d'un angle qui est inférieur à un angle de référence α₀ prédéfini par rapport à quand elle est dans la position de transport, et pour permettre le désaccouplement de la portion de base (12) de la structure portante (5) au moins quand la structure portante (5) est inclinée dudit angle de référence α₀ prédéfini par rapport à quand elle est dans la position de transport ;
où lesdits premiers moyens d'assujettissement (14) comprennent :
- des moyens de support (21), montés sur la structure portante (5) et fixés à la structure portante (5), pour supporter la ridelle latérale ouvrable (10) ;
- des moyens de soutien (22), montés sur la portion de base (12), fixés à la portion de base (12) et pouvant être accouplés auxdits moyens de support (21) ; et
- des moyens d'association (23), pouvant être opérationnellement associés auxdits moyens de soutien (22), pour maintenir les moyens de soutien (22) accouplés aux moyens de support (21) quand la ridelle latérale ouvrable (10) est dans les premières positions d'ouverture, et pour laisser essentiellement les moyens de soutien (22) libres de se désaccoupler des moyens de support (21) quand la ridelle latérale ouvrable (10) est dans la position de fermeture ;
**caractérisé en ce que** lesdits moyens d'association (23) comprennent au moins un élément de blocage (30), comprenant une partie terminale (31), et au moins un corps profilé (32), l'élément de blocage (30) et le corps profilé (32) étant associés l'un à la structure portante (5) et l'autre à la portion de base (12) ;
ledit corps profilé (32) et ladite partie terminale (31) étant essentiellement alignés l'un par rapport à l'autre dans un plan perpendiculaire au premier axe de rotation selon une direction de déblocage au moins quand la ridelle latérale ouvrable (10) est dans les premières positions d'ouverture, essentiellement pour empêcher un mouvement réciproque de la partie terminale (31) et du corps profilé (32) le long de la direction de déblocage et pour maintenir la portion de base (12) accouplée à la structure portante (5) ;
ledit corps profilé (32) et ladite partie terminale (31) étant essentiellement désalignés l'un de l'autre par rapport à la direction de déblocage quand la ridelle latérale ouvrable (10) est dans la position de fermeture, essentiellement pour permettre un mouvement réciproque de la partie terminale (31) par rapport au corps profilé (32) le long de la direction de déblocage et pour laisser essentiellement la portion de base (12) libre de se désaccoupler de la structure portante (5).

2. Le camion selon la revendication 1, dans lequel lesdits moyens de support (21) et lesdits moyens de soutien (22) comprennent, les uns au moins un élément de support (24), et les autres au moins une goupille (25), ladite goupille (25) s'étendant essentiellement selon un axe d'extension longitudinal et pouvant être accouplée avec l'élément de support (24) de façon pivotante autour dudit premier axe de rotation,
la goupille (25) étant essentiellement libre de se désaccoupler de l'élément de support (24) selon la direction de déblocage quand la ridelle latérale ouvrable (10) est dans la position de fermeture ; ladite direction de déblocage étant essentiellement orthogonale à l'axe d'extension longitudinal.

3. Le camion selon la revendication 2, dans lequel ladite goupille (25) comprend ledit corps profilé (32) et un renfoncement (33) réalisé au niveau du corps profilé (32), la partie terminale (31) et le renfoncement (33) étant essentiellement alignés entre eux dans le plan perpendiculaire au premier axe de rotation selon la direction de déblocage quand la ridelle latérale ouvrable (10) est dans la position de fermeture et la partie terminale (31) pouvant s'insérer dans le renfoncement (33) quand la ridelle latérale ouvrable (10) se déplace de la position de fermeture vers les deuxièmes positions d'ouverture.

4. Le camion selon la revendication 2 ou 3, dans lequel l'élément de support (24) et l'élément de blocage (30) forment un corps unique (34).

5. Le camion selon la revendication 4, dans lequel ledit corps unique (34) a, perpendiculairement au premier axe de rotation, une forme en « C » avec deux extrémités (35), une desdites extrémités (35) se projetant vers l'autre et étant constituée de ladite partie terminale (31), le corps unique (34) formant à l'intérieur de la forme en « C » un logement (36) dans lequel ladite goupille (25) peut être insérée de façon pivotante et coulissante et être extraite selon ladite direction de déblocage quand ledit corps profilé (32) et ladite partie terminale (31) sont essentiellement désalignés l'un de l'autre par rapport à ladite direction de déblocage.

6. Le camion selon l'une quelconque des revendications de 2 à 5, dans lequel lesdits moyens de support (21) et lesdits moyens de soutien (22) comprennent, les uns au moins deux éléments de support (24), et les autres au moins deux goupilles (25) et les moyens d'association (23) comprennent au moins deux éléments de blocage (30) et au moins deux corps profilés (32).

7. Le camion selon l'une quelconque des revendications de 2 à 6, dans lequel les moyens d'accouplement (20) comprennent un élément de contact (39), fixé au châssis (2), et un levier (38), opérationnellement associé au châssis (2) et aux premiers moyens d'assujettissement (14), ledit levier (38) étant monté sur la structure portante (5) de façon pivotante autour d'un axe de rotation secondaire essentiellement parallèle au premier axe de rotation, ledit levier (38) comprenant un premier bras (41), opérationnellement associé audit élément de contact (39), et un deuxième bras (42), opérationnellement associé à ladite goupille (25),
le premier bras (41) interagissant avec l'élément de contact (39) en fonction de la position de la structure portante (5) pour déterminer une rotation du levier (38) autour dudit axe de rotation secondaire entre une pluralité de positions initiales, dans lesquelles le deuxième bras (42) maintient la portion de base (12) accouplée à la structure portante (5) quand la ridelle latérale ouvrable (10) est dans la position de fermeture et la structure portante (5) est dans une des positions de basculement et est inclinée d'un angle qui est inférieur à l'angle de référence α₀ prédéfini par rapport à quand elle est dans la position de transport, et au moins une position finale, dans laquelle le deuxième bras (42) permet le désaccouplement de la portion de base (12) de la structure portante (5) au moins quand la structure portante (5) est inclinée, par rapport à quand elle est dans la position de transport, dudit angle de référence α₀ prédéfini.

8. Le camion selon les revendications 6 et 7, dans lequel les moyens d'accouplement (20) comprennent une tige (50), fixée audit levier (38), et un troisième bras (51), fixé à ladite tige (50) et à distance du levier (38), le troisième bras (51) étant aligné avec le deuxième bras (42) le long de l'axe de rotation secondaire et pivotant autour de l'axe de rotation secondaire de façon synchronisée avec le deuxième bras (42), le deuxième bras (42) et le troisième bras (51) étant opérationnellement associés l'un à une première desdites goupilles (25) et l'autre à une deuxième desdites goupilles (25) pour maintenir la portion de base (12) accouplée à la structure portante (5) quand la ridelle latérale ouvrable (10) est dans la position de fermeture et la structure portante (5) est dans une des positions de basculement et est inclinée, par rapport à quand elle est dans la position de transport, d'un angle qui est inférieur à l'angle de référence α₀ prédéfini, et pour permettre le désaccouplement de la portion de base (12) de la structure portante (5) au moins quand la structure portante (5) est inclinée, par rapport à quand elle est dans la position de transport, dudit angle de référence α₀ prédéfini.

9. Le camion selon la revendication 7 ou 8, dans lequel lesdits moyens d'accouplement (20) comprennent aussi des moyens élastiques (48), associés au levier (38) et à la structure portante (5), pour pousser ledit premier bras (41) vers l'élément de contact (39).

10. Le camion selon l'une quelconque des revendications précédentes, **caractérisé en ce que** les moyens d'accouplement (20) sont destinés à maintenir la portion de base (12) accouplée à la structure portante (5) même quand la structure portante (5) est dans une des positions de basculement et est inclinée, par rapport à quand elle est dans la position de transport, d'un angle qui est supérieur à l'angle de référence α₀ prédéfini d'au moins une valeur prédéfinie.

11. Le camion selon la revendication 10 et l'une quelconque des revendications de 7 à 9, dans lequel, quand la structure portante (5) est dans une des positions de basculement et est inclinée, par rapport à quand elle est dans la position de transport, d'un angle qui est supérieur à l'angle de référence α₀ prédéfini d'au moins une valeur prédéfinie, le deuxième bras (42) est dans une de ses propres positions initiales.
